# EUROPÄISCHE PATENTANMELDUNG

(11) **EP 3 836 375 A1**
(43) Veröffentlichungstag der Anmeldung: **16.06.2021**
(21) Anmeldenummer: 21155854.9
(22) Anmeldetag: 23.04.2015
(51) Int. Cl.: H02M 1/10, H02J 13/00, H02M 1/36

(54) **ENERGIEVERSORGUNGSGERÄT**

(30) Priorität: 28.04.2014 DE 102014105909
(62) Teilanmeldung aus: 15721596.3
(71) Anmelder: Phoenix Contact GmbH & Co. KG, 32825 Blomberg (DE)
(72) Erfinder: ZEUCH, Jochen, 32825 Blomberg (DE); HENKEL, Hartmut, 32825 Blomberg (DE); SCHWEER, Patrick, 31785 Hameln (DE)
(74) Vertreter: Patentship Patentanwaltsgesellschaft mbH

(57) **Zusammenfassung**

Die vorliegende Erfindung betrifft ein Energieversorgungsgerät (100), mit: einer Auswerteeinheit (101) zum Bestimmen einer Signalisierungsinformation, welche einen Betriebszustand des Energieversorgungsgerätes (100) anzeigt; und einer Kommunikationsschnittstelle (103) zum Ausgeben der Signalisierungsinformation; wobei die Auswerteeinheit (101) ausgebildet ist, eine Betriebsgröße des Energieversorgungsgerätes (100) zu erfassen; einen Charakterisierungsparameter einzustellen; und die erfasste Betriebsgröße des Energieversorgungsgerätes (100) in Abhängigkeit von dem Charakterisierungsparameter zu charakterisieren, um die Signalisierungsinformation zu erhalten.

## Beschreibung

Die vorliegende Erfindung betrifft ein Energieversorgungsgerät mit einer Kommunikationsschnittstelle zur Signalisierung eines Betriebszustandes.

Ein Energieversorgungsgerät, wie ein universelles Spannungsversorgungsgerät oder ein universelles Stromversorgungsgerät, umfasst häufig eine Erfassungseinrichtung zum Erfassen einer Betriebsgröße, wie einer Ausgangsspannung. Die Betriebsgröße kann auf Überschreiten oder Unterschreiten eines vorbestimmten Schwellwertes überprüft werden, um eine Signalisierungsinformation zu erhalten, welche über einen Signalisierungsausgang des Energieversorgungsgerätes ausgegeben werden kann. Beispielsweise gibt die Signalisierungsinformation an, ob die Ausgangsspannung des Energieversorgungsgerätes einen vorbestimmten Amplitudenschwellwert für die Ausgangsspannung überschreitet oder unterschreitet. Hierbei sind häufig sowohl die zur Bestimmung der Signalisierungsinformation verwendete Betriebsgröße als auch der vorbestimmte Schwellwert fest vorgegeben. Dies kann als unkomfortabel empfunden werden.

Es ist die der Erfindung zugrundeliegende Aufgabe, ein effizientes Konzept für eine einstellbare Signalisierung eines Betriebszustandes eines Energieversorgungsgerätes anzugeben.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Energieversorgungsgerät gelöst, mit: einer Auswerteeinheit zum Bestimmen einer Signalisierungsinformation, welche einen Betriebszustand des Energieversorgungsgerätes anzeigt; und einer Kommunikationsschnittstelle zum Ausgeben der Signalisierungsinformation; wobei die Auswerteeinheit ausgebildet ist, eine Betriebsgröße des Energieversorgungsgerätes zu erfassen; einen Charakterisierungsparameter einzustellen; und die erfasste Betriebsgröße des Energieversorgungsgerätes in Abhängigkeit von dem Charakterisierungsparameter zu charakterisieren, um die Signalisierungsinformation zu erhalten. Dadurch wird der Vorteil erreicht, dass ein Energieversorgungsgerät mit einer einstellbaren Signalisierung eines Betriebszustandes des Energieversorgungsgerätes bereitgestellt werden kann.

Das Energieversorgungsgerät kann ein elektrisches Energieversorgungsgerät, wie ein universelles Spannungsversorgungsgerät oder ein universelles Stromversorgungsgerät, sein. Ferner kann die Betriebsgröße eine Eingangsspannung, ein Eingangsstrom, eine Ausgangsspannung oder ein Ausgangsstrom des Energieversorgungsgerätes sein.

Der Betriebszustand kann eine gültige oder ungültige Eingangsspannung, ein gültiger oder ungültiger Eingangsstrom, eine gültige oder ungültige Ausgangsspannung und/oder ein gültiger oder ungültiger Ausgangsstrom sein.

Der Charakterisierungsparameter kann einen Amplitudenschwellwert einer Eingangsspannung, einen Amplitudenschwellwert eines Eingangsstroms, einen Amplitudenschwellwert einer Ausgangsspannung, einen Amplitudenschwellwert eines Ausgangsstroms oder einen Frequenzschwellwert einer Frequenz umfassen. Ferner kann der Charakterisierungsparameter durch die Auswerteeinheit aus einer Mehrzahl von vorgespeicherten Charakterisierungsparametern ausgewählt werden, um den Charakterisierungsparameter einzustellen. Die Signalinformation kann ein Bit oder eine Folge von Bits sein.

Die Auswerteeinheit kann ein Mikrocontroller sein oder einen Mikrocontroller umfassen. Ferner kann die Auswerteeinheit einen Prozessor, einen Logikbaustein und/oder eine diskrete analoge Schaltung umfassen. Die Auswerteeinheit kann ferner ausgebildet sein, die erfasste Betriebsgröße des Energieversorgungsgerätes auf Überschreiten oder Unterschreiten eines Schwellwertes zu überprüfen, um die erfasste Betriebsgröße zu charakterisieren. Beispielsweise überprüft die Auswerteeinheit die Ausgangsspannung des Energieversorgungsgerätes auf Überschreiten einer Mindestausgangsspannung, um die Signalisierungsinformation zu erhalten. Die Signalisierungsinformation kann hierbei ein Signal Power Good oder DCOK umfassen, welches signalisiert, dass die Ausgangsspannung des Energieversorgungsgerätes die Mindestausgangsspannung oder einen Minimalwert überschreitet. Ferner kann die Auswerteeinheit ausgebildet sein, das Ergebnis des Charakterisierens der erfassten Betriebsgröße des Energieversorgungsgerätes in Abhängigkeit von dem Charakterisierungsparameter zu invertieren.

Die Auswerteeinheit kann ferner ausgebildet sein, eine Temperatur, wie eine Gehäusetemperatur des Energieversorgungsgerätes oder eine Umgebungstemperatur des Energieversorgungsgerätes, zu erfassen. Beispielsweise kann bei Unterschreitung eines ersten Temperaturschwellwertes durch die Gehäusetemperatur des Energieversorgungsgerätes ein Erwärmen des Gehäuses des Energieversorgungsgerätes oder ein Warmlaufen des Energieversorgungsgerätes mittels eines Lastwiderstandes durchgeführt werden. Hierzu kann ein Strom durch den Lastwiderstand geleitet werden, welcher sich durch den Stromfluss erwärmt. Der erste Temperaturschwellwert kann -60°C, -50°C; -40°C, -30°C, -20°C, -10°C, 0°C oder 10°C betragen. Ferner kann bei Überschreitung eines zweiten Temperaturschwellwertes durch die Gehäusetemperatur des Energieversorgungsgerätes eine Ausgangsleistung des Energieversorgungsgerätes reduziert werden oder ein Derating des Energieversorgungsgerätes durchgeführt werden. Der zweite Temperaturschwellwert kann 30°C, 40°C, 50°C, 60°C, 70°C, 80°C, 90°C, 100°C, 110°C, 120°C oder 130°C betragen.

Ferner kann die Auswerteeinheit ausgebildet sein, eine Betriebszeit, wie Betriebsstunden, des Energieversorgungsgerätes zu erfassen. Beispielsweise umfasst das Energieversorgungsgerät einen Elektrolytkondensator mit einer begrenzten Lebensdauer. Mittels der Signalisierungsinformation kann ein Erreichen einer Vorwarnschwelle oder eines Zeitschwellwertes, beispielsweise 70%, 80% oder 90% der Lebensdauer des Elektrolytkondensators, durch die Betriebszeit signalisiert werden.

Die Kommunikationsschnittstelle kann eine drahtgebundene und/oder eine drahtlose Kommunikationsschnittstelle umfassen. Beispielsweise umfasst die Kommunikationsschnittstelle eine serielle Schnittstelle, eine Schnittstelle nach dem Standard Power Management Bus (PMBus), eine Schnittstelle nach dem Standard Universal Serial Bus (USB), eine Schnittelle zur drahtlosen Kommunikation mittels Radio-Frequency-Identification (RFID), beispielsweise nach dem Standard ISO/IEC 14443 oder ISO/IEC 18000-3, eine Schnittstelle zur drahtlosen Kommunikation mittels Near-Field-Communication (NFC), beispielsweise nach dem Standard ISO/IEC 14443 oder ISO/IEC 18092, oder eine Schnittstelle zur drahtlosen Kommunikation nach einem der Standards Bluetooth, ZigBee oder Wireless Local Area Network (W-LAN). Ferner kann die Kommunikationsschnittstelle einen Signalisierungsausgang umfassen.

In einer vorteilhaften Ausführungsform des Energieversorgungsgerätes ist die Auswerteeinheit ausgebildet, den Charakterisierungsparameter aus einer Mehrzahl von vorgespeicherten Charakterisierungsparametern auszuwählen, um den Charakterisierungsparameter einzustellen. Dadurch wird der Vorteil erreicht, dass der Charakterisierungsparameter effizient eingestellt werden kann.

In einer weiteren vorteilhaften Ausführungsform des Energieversorgungsgerätes ist die Auswerteeinheit ausgebildet, die erfasste Betriebsgröße des Energieversorgungsgerätes auf Überschreiten oder Unterschreiten eines Schwellwertes zu überprüfen, um die erfasste Betriebsgröße des Energieversorgungsgerätes in Abhängigkeit von dem Charakterisierungsparameter zu charakterisieren. Dadurch wird der Vorteil erreicht, dass ein Betriebszustand des Energieversorgungsgerätes effizient bestimmt werden kann.

In einer weiteren vorteilhaften Ausführungsform des Energieversorgungsgerätes umfasst der Charakterisierungsparameter zumindest einen der folgenden Parameter: einen Amplitudenschwellwert einer Eingangsspannung, einen Amplitudenschwellwert eines Eingangsstroms, einen Amplitudenschwellwert einer Ausgangsspannung, einen Amplitudenschwellwert eines Ausgangsstroms, einen Frequenzschwellwert einer Frequenz, einen Leistungsschwellwert einer Eingangsleistung, einen Leistungsschwellwert einer Ausgangsleistung, einen Temperaturschwellwert einer Temperatur, einen Zeitschwellwert einer Betriebszeit, einen Schwellwert einer Welligkeit einer Ausgangspannung oder einen Schwellwert einer Welligkeit eines Ausgangsstroms. Dadurch wird der Vorteil erreicht, dass ein effizienter Charakterisierungsparameter eingestellt werden kann.

In einer weiteren vorteilhaften Ausführungsform des Energieversorgungsgerätes ist die Betriebsgröße des Energieversorgungsgerätes eine der folgenden Betriebsgrößen: eine Eingangsspannung, ein Eingangsstrom, eine Ausgangsspannung, ein Ausgangsstrom, eine Frequenz, eine Eingangsleistung, eine Ausgangsleistung, eine Temperatur, eine Betriebszeit, eine Welligkeit einer Ausgangsspannung oder eine Welligkeit eines Ausgangsstroms. Dadurch wird der Vorteil erreicht, dass der Betriebszustand des Energieversorgungsgerätes auf der Basis einer Eingangsgröße oder einer Ausgangsgröße des Energieversorgungsgerätes signalisiert werden kann.

In einer weiteren vorteilhaften Ausführungsform des Energieversorgungsgerätes ist die Auswerteeinheit ausgebildet, eine weitere Betriebsgröße des Energieversorgungsgerätes zu erfassen, und die erfasste Betriebsgröße des Energieversorgungsgerätes sowie die weitere erfasste Betriebsgröße des Energieversorgungsgerätes in Abhängigkeit von dem Charakterisierungsparameter zu charakterisieren, um die Signalisierungsinformation zu erhalten. Dadurch wird der Vorteil erreicht, dass der Betriebszustand des Energieversorgungsgerätes auf der Basis einer Mehrzahl von Eingangsgrößen und/oder Ausgangsgrößen des Energieversorgungsgerätes signalisiert werden kann.

Beispielsweise ist die erfasste Betriebsgröße eine Ausgangsspannung und die weitere Betriebsgröße ein korrespondierender Ausgangsstrom des Energieversorgungsgerätes.

In einer weiteren vorteilhaften Ausführungsform des Energieversorgungsgerätes ist die Auswerteeinheit ausgebildet, die erfasste Betriebsgröße des Energieversorgungsgerätes und die weitere erfasste Betriebsgröße des Energieversorgungsgerätes durch eine logische Operation zu verknüpfen, um die Signalisierungsinformation zu erhalten. Dadurch wird der Vorteil erreicht, dass der Betriebszustand effizient bestimmt werden kann.

Die logische Operation kann eine UND-Operation (AND), eine ODER-Operation (OR), eine Exklusiv-ODER-Operation (XOR), eine Nicht-UND-Operation (NAND), eine Nicht-ODER-Operation (NOR) und/oder eine Nicht-Exklusiv-ODER-Operation (XNOR) umfassen. Beispielsweise überprüft die Auswerteeinheit jeweils eine Ausgangsspannung und einen korrespondierenden Ausgangsstrom auf Überschreiten eines jeweiligen Schwellwertes und verknüpft die Ergebnisse der jeweiligen Überprüfung durch eine UND-Operation, um die Signalisierungsinformation zu erhalten.

In einer weiteren vorteilhaften Ausführungsform des Energieversorgungsgerätes ist die Kommunikationsschnittstelle ausgebildet ist, ein digitales Signal auszugeben, um den Betriebszustand des Energieversorgungsgerätes anzuzeigen. Dadurch wird der Vorteil erreicht, dass die Signalisierungsinformation effizient weiterverarbeitet werden kann.

In einer weiteren vorteilhaften Ausführungsform des Energieversorgungsgerätes ist die Kommunikationsschnittstelle ausgebildet ist, den Charakterisierungsparameter über ein Kommunikationsnetzwerk zu empfangen. Dadurch wird der Vorteil erreicht, dass der Charakterisierungsparameter effizient eingestellt werden kann.

Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

In einer weiteren vorteilhaften Ausführungsform des Energieversorgungsgerätes ist das Energieversorgungsgerät mit einem Speicher zum Speichern des empfangenen Charakterisierungsparameters ausgebildet, wobei die Auswerteeinheit ausgebildet ist, den Charakterisierungsparameter aus dem Speicher auszulesen, um den Charakterisierungsparameter einzustellen. Dadurch wird der Vorteil erreicht, dass der Charakterisierungsparameter effizient eingestellt werden kann.

Der Speicher kann einen elektrisch löschbaren programmierbaren Nur-Lese-Speicher, beispielsweise einen Electrically-Erasable-Programmable-Read-Only-Memory (EEPROM) Speicher, umfassen. Ferner kann die Auswerteeinheit ausgebildet sein, die Parametrisierungsdaten bei einer Aktivierung des Energieversorgungsgerätes aus dem Speicher auszulesen.

Das Energieversorgungsgerät kann ferner ausgebildet sein, eine Mehrzahl von Charakterisierungsparametern in dem Speicher zu speichern, wobei die Auswerteeinheit ausgebildet ist, den Charakterisierungsparameter aus der Mehrzahl von gespeicherten Charakterisierungsparametern auszuwählen, um den Charakterisierungsparameter einzustellen.

In einer weiteren vorteilhaften Ausführungsform des Energieversorgungsgerätes ist die Kommunikationsschnittstelle ausgebildet, den Charakterisierungsparameter über das Kommunikationsnetzwerk von einem Kommunikationsgerät zu empfangen. Dadurch wird der Vorteil erreicht, dass der Charakterisierungsparameter effizient an das Energieversorgungsgerät übertragen werden kann.

Das Kommunikationsgerät kann ein Computer, ein Smartphone oder ein Handgerät sein.

In einer weiteren vorteilhaften Ausführungsform des Energieversorgungsgerätes umfasst die Kommunikationsschnittstelle eine drahtlose Kommunikationsschnittstelle. Dadurch wird der Vorteil erreicht, dass das Energieversorgungsgerät und das Kommunikationsgerät galvanisch getrennt sein können.

In einer weiteren vorteilhaften Ausführungsform des Energieversorgungsgerätes umfasst die Kommunikationsschnittstelle eine Nahfeldkommunikationsschnittstelle. Dadurch wird der Vorteil erreicht, dass eine effiziente Kommunikationsschnittstelle zum Empfangen des Charakterisierungsparameters verwendet werden kann.

Die Nahfeldkommunikationsschnittstelle kann zur Kommunikation mittels Near-Field-Communication (NFC), beispielsweise nach dem Standard ISO/IEC 14443 oder ISO/IEC 18092, ausgebildet sein.

In einer weiteren vorteilhaften Ausführungsform des Energieversorgungsgerätes ist die Kommunikationsschnittstelle drahtlos mit elektrischer Energie versorgbar. Dadurch wird der Vorteil erreicht, dass der Charakterisierungsparameter in einem deaktivierten Zustand des Energieversorgungsgeräts eingestellt werden kann.

In einer weiteren vorteilhaften Ausführungsform des Energieversorgungsgerätes umfasst die Kommunikationsschnittstelle eine Antenne, welche innerhalb eines Gehäuses des Energieversorgungsgerätes angeordnet oder in einer Gehäusewand eines Gehäuses des Energieversorgungsgerätes integriert ist. Dadurch wird der Vorteil erreicht, dass das Energieversorgungsgerät eine besonders kompakte Bauform aufweisen kann.

Die Antenne kann durch Leiterbahnen auf einer Platine oder einer Leiterplatte gebildet sein. Ferner kann das Gehäuse des Energieversorgungsgerätes ein Kunststoffgehäuse sein oder ein für elektromagnetische Signale durchlässiges Gehäuseelement umfassen.

Gemäß einem zweiten Aspekt der Erfindung wird die Aufgabe durch ein Verfahren zum Bestimmen einer Signalisierungsinformation, welche einen Betriebszustand eines Energieversorgungsgerätes anzeigt, gelöst, mit: Erfassen einer Betriebsgröße des Energieversorgungsgerätes; Einstellen eines Charakterisierungsparameters; Charakterisieren der erfassten Betriebsgröße in Abhängigkeit von dem Charakterisierungsparameter, um die Signalisierungsinformation zu erhalten; und Ausgeben der Signalisierungsinformation über eine Kommunikationsschnittstelle des Energieversorgungsgerätes. Dadurch wird der Vorteil erreicht, dass die Signalisierung des Betriebszustandes des Energieversorgungsgerätes effizient eingestellt werden kann.

Zum Einstellen des Charakterisierungsparameters kann der Charakterisierungsparameter aus einer Mehrzahl von vorgespeicherten Charakterisierungsparametern ausgewählt werden.

In einer vorteilhaften Ausführungsform des Verfahrens umfasst das Verfahren ferner: Erfassen einer weiteren Betriebsgröße des Energieversorgungsgerätes; und Charakterisieren der erfassten Betriebsgröße des Energieversorgungsgerätes sowie der weiteren erfassten Betriebsgröße des Energieversorgungsgerätes in Abhängigkeit von dem Charakterisierungsparameter, um die Signalisierungsinformation zu erhalten. Dadurch wird der Vorteil erreicht, dass der Betriebszustand des Energieversorgungsgerätes auf der Basis einer Mehrzahl von Eingangsgrößen und/oder Ausgangsgrößen signalisiert werden kann.

Die erfasste Betriebsgröße des Energieversorgungsgerätes und die weitere erfasste Betriebsgröße des Energieversorgungsgerätes können durch eine logische Operation verknüpft werden, um die erfasste Betriebsgröße des Energieversorgungsgerätes sowie die weitere erfasste Betriebsgröße des Energieversorgungsgerätes in Abhängigkeit von dem Charakterisierungsparameter zu charakterisieren. Die logische Operation kann eine UND-Operation (AND), eine ODER-Operation (OR), eine Exklusiv-ODER-Operation (XOR), eine Nicht-UND-Operation (NAND), eine Nicht-ODER-Operation (NOR) und/oder eine Nicht-Exklusiv-ODER-Operation (XNOR) umfassen. Beispielsweise werden jeweils eine Ausgangsspannung und ein Ausgangsstrom auf Überschreiten eines jeweiligen Schwellwertes überprüft und die Ergebnisse der jeweiligen Überprüfung werden durch eine UND-Operation verknüpft, um die Signalisierungsinformation zu erhalten.

In einer weiteren vorteilhaften Ausführungsform des Verfahrens umfasst das Verfahren ferner: Empfangen des Charakterisierungsparameters über ein Kommunikationsnetzwerk. Dadurch wird der Vorteil erreicht, dass der Charakterisierungsparameter effizient eingestellt werden kann.

Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

Ausführungsbeispiele der Erfindung sind in den Zeichnungen dargestellt und werden im Folgenden näher beschrieben.

Es zeigen:
- Fig. 1: ein schematisches Diagramm eines Energieversorgungsgerätes gemäß einer Ausführungsform;
- Fig. 2: ein schematisches Diagramm eines Verfahrens zum Bestimmen einer Signalisierungsinformation, welche einen Betriebszustand eines Energieversorgungsgerätes anzeigt, gemäß einer Ausführungsform; und
- Fig. 3: ein schematisches Diagramm eines Verfahrens zum Bestimmen einer Signalisierungsinformation, welche einen Betriebszustand eines Energieversorgungsgerätes anzeigt, gemäß einer weiteren Ausführungsform.

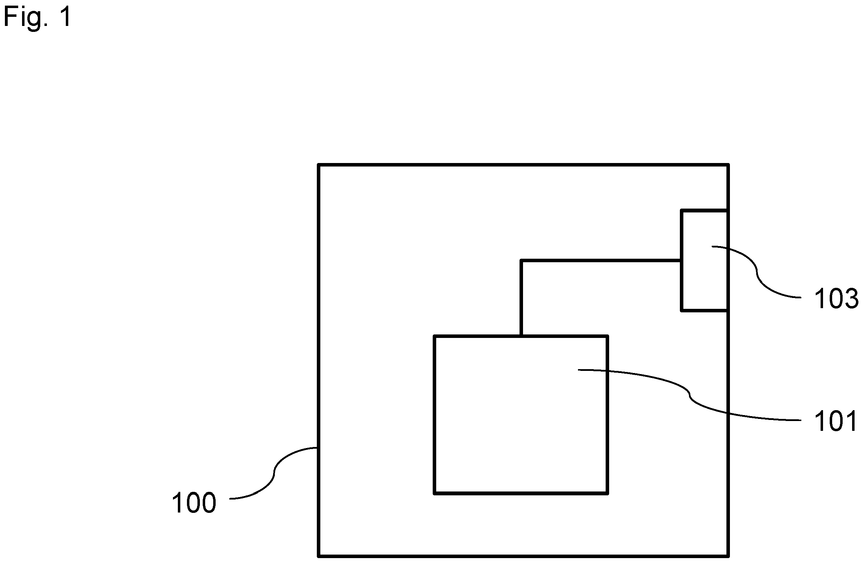

Fig. 1 zeigt ein schematisches Diagramm eines Energieversorgungsgerätes 100 gemäß einer Ausführungsform. Das Energieversorgungsgerät 100 umfasst eine Auswerteeinheit 101 und eine Kommunikationsschnittstelle 103.

Das Energieversorgungsgerät 100 ist ausgebildet mit: der Auswerteeinheit 101 zum Bestimmen einer Signalisierungsinformation, welche einen Betriebszustand des Energieversorgungsgerätes 100 anzeigt; und der Kommunikationsschnittstelle 103 zum Ausgeben der Signalisierungsinformation; wobei die Auswerteeinheit 101 ausgebildet ist, eine Betriebsgröße des Energieversorgungsgerätes 100 zu erfassen; einen Charakterisierungsparameter einzustellen; und die erfasste Betriebsgröße des Energieversorgungsgerätes 100 in Abhängigkeit von dem Charakterisierungsparameter zu charakterisieren, um die Signalisierungsinformation zu erhalten.

Das Energieversorgungsgerät 100 kann ein elektrisches Energieversorgungsgerät, wie ein universelles Spannungsversorgungsgerät oder ein universelles Stromversorgungsgerät, sein. Ferner kann die Betriebsgröße eine Eingangsspannung, ein Eingangsstrom, eine Ausgangsspannung oder ein Ausgangsstrom des Energieversorgungsgerätes 100 sein.

Der Betriebszustand kann eine gültige oder ungültige Eingangsspannung, ein gültiger oder ungültiger Eingangsstrom, eine gültige oder ungültige Ausgangsspannung und/oder ein gültiger oder ungültiger Ausgangsstrom sein.

Der Charakterisierungsparameter kann einen Amplitudenschwellwert einer Eingangsspannung, einen Amplitudenschwellwert eines Eingangsstroms, einen Amplitudenschwellwert einer Ausgangsspannung, einen Amplitudenschwellwert eines Ausgangsstroms oder einen Frequenzschwellwert einer Frequenz umfassen. Ferner kann der Charakterisierungsparameter durch die Auswerteeinheit 101 aus einer Mehrzahl von vorgespeicherten Charakterisierungsparametern ausgewählt werden, um den Charakterisierungsparameter einzustellen. Die Signalinformation kann ein Bit oder eine Folge von Bits sein.

Die Auswerteeinheit 101 kann ein Mikrocontroller sein oder einen Mikrocontroller umfassen. Ferner kann die Auswerteeinheit 101 einen Prozessor, einen Logikbaustein und/oder eine diskrete analoge Schaltung umfassen. Die Auswerteeinheit 101 kann ferner ausgebildet sein, die erfasste Betriebsgröße des Energieversorgungsgerätes 100 auf Überschreiten oder Unterschreiten eines Schwellwertes zu überprüfen, um die erfasste Betriebsgröße zu charakterisieren. Beispielsweise überprüft die Auswerteeinheit 101 die Ausgangsspannung des Energieversorgungsgerätes 100 auf Überschreiten einer Mindestausgangsspannung, um die Signalisierungsinformation zu erhalten. Die Signalisierungsinformation kann hierbei ein Signal Power Good oder DCOK umfassen, welches signalisiert, dass die Ausgangsspannung des Energieversorgungsgerätes 100 die Mindestausgangsspannung oder einen Minimalwert überschreitet. Ferner kann die Auswerteeinheit 101 ausgebildet sein, das Ergebnis des Charakterisierens der erfassten Betriebsgröße des Energieversorgungsgerätes 100 in Abhängigkeit von dem Charakterisierungsparameter zu invertieren.

Die Auswerteeinheit 101 kann ferner ausgebildet sein, eine Temperatur, wie eine Gehäusetemperatur des Energieversorgungsgerätes 100 oder eine Umgebungstemperatur des Energieversorgungsgerätes 100, zu erfassen. Beispielsweise kann bei Unterschreitung eines ersten Temperaturschwellwertes durch die Gehäusetemperatur des Energieversorgungsgerätes 100 ein Erwärmen des Gehäuses des Energieversorgungsgerätes 100 oder ein Warmlaufen des Energieversorgungsgerätes 100 mittels eines Lastwiderstandes durchgeführt werden. Hierzu kann ein Strom durch den Lastwiderstand geleitet werden, welcher sich durch den Stromfluss erwärmt. Der erste Temperaturschwellwert kann -60°C, -50°C; -40°C, -30°C, -20°C, -10°C, 0°C oder 10°C betragen. Ferner kann bei Überschreitung eines zweiten Temperaturschwellwertes durch die Gehäusetemperatur des Energieversorgungsgerätes 100 eine Ausgangsleistung des Energieversorgungsgerätes 100 reduziert werden oder ein Derating des Energieversorgungsgerätes 100 durchgeführt werden. Der zweite Temperaturschwellwert kann 30°C, 40°C, 50°C, 60°C, 70°C, 80°C, 90°C, 100°C, 110°C, 120°C oder 130°C betragen.

Ferner kann die Auswerteeinheit 101 ausgebildet sein, eine Betriebszeit, wie Betriebsstunden, des Energieversorgungsgerätes 100 zu erfassen. Beispielsweise umfasst das Energieversorgungsgerät 100 einen Elektrolytkondensator mit einer begrenzten Lebensdauer. Mittels der Signalisierungsinformation kann ein Erreichen einer Vorwarnschwelle oder eines Zeitschwellwertes, beispielsweise 70%, 80% oder 90% der Lebensdauer des Elektrolytkondensators, durch die Betriebszeit signalisiert werden.

Die Kommunikationsschnittstelle 103 kann eine drahtgebundene und/oder eine drahtlose Kommunikationsschnittstelle umfassen. Beispielsweise umfasst die Kommunikationsschnittstelle 103 eine serielle Schnittstelle, eine Schnittstelle nach dem Standard Power Management Bus (PMBus), eine Schnittstelle nach dem Standard Universal Serial Bus (USB), eine Schnittelle zur drahtlosen Kommunikation mittels Radio-Frequency-Identification (RFID), beispielsweise nach dem Standard ISO/IEC 14443 oder ISO/IEC 18000-3, eine Schnittstelle zur drahtlosen Kommunikation mittels Near-Field-Communication (NFC), beispielsweise nach dem Standard ISO/IEC 14443 oder ISO/IEC 18092, oder eine Schnittstelle zur drahtlosen Kommunikation nach einem der Standards Bluetooth, ZigBee oder Wireless Local Area Network (W-LAN). Ferner kann die Kommunikationsschnittstelle 103 einen Signalisierungsausgang umfassen.

Gemäß einer Ausführungsform kann die Kommunikationsschnittstelle 103 oder eine Mehrzahl von Signalisierungsausgängen frei einstellbar sein. Ferner können verschiedene Betriebsgrößen und/oder Charakterisierungsparameter frei einstellbar sein.

Gemäß einer weiteren Ausführungsform kann das Energieversorgungsgerät 100 eine Mehrzahl von verschiedenen Betriebsgrößen mittels einer Auswerteeinheit 101 oder in einem Mikrocontroller erfassen und diese auswerten oder charakterisieren. Zur Auswertung oder zum Charakterisieren der Betriebsgrößen für eine Signalisierung können die Betriebsgrößen über die Kommunikationsschnittstelle 103, eine Schnittstelle an der Auswerteeinheit 101 oder eine Schnittstelle an einem Mikrocontroller beliebig parametriert werden. Die in der Auswertung oder bei dem Charakterisieren erhaltenen Signale können beliebig weiterverarbeitet und als ein digitales Signal ausgegeben werden, beispielsweise über die Kommunikationsschnittstelle 103 oder einen Signalisierungsausgang.

Gemäß einer weiteren Ausführungsform kann die Auswerteeinheit 101 oder ein Mikrocontroller verschiedene Betriebsgrößen erfassen. Zur Auswertung oder zum Charakterisieren für eine Signalisierung können Betriebsgrößen auf Unterschreitung oder Überschreitung eines jeweiligen Schwellwertes überprüft werden. Die Betriebsgrößen und/oder die jeweiligen Schwellwerte können über die Kommunikationsschnittstelle 103, eine Schnittstelle der Auswerteeinheit 101 oder eine Schnittstelle des Mikrocontrollers beliebig parametriert werden. Die erhaltenen Signale können beliebig weiterverarbeitet werden. Beispielsweise wird ein Signal einer Betriebsgröße invertiert oder nicht-invertiert und mit einem einer weiteren Betriebsgröße zugeordnetem Signal durch eine logische Operation, wie eine UND-Operation (AND) oder eine ODER-Operation (OR), verknüpft. Im weiteren Verlauf kann die erhaltene Signalisierungsinformation als ein digitales Signal ausgegeben werden. Ferner kann eine Betriebsgröße auch mehrfach verwendet oder verknüpft werden. Beispielsweise wird eine Betriebsgröße, wie ein Ausgangsstrom, auf Unterschreiten oder Überschreiten eines Schwellwertes überprüft und das Ergebnis der Überprüfung mittels der Signalisierungsinformation signalisiert.

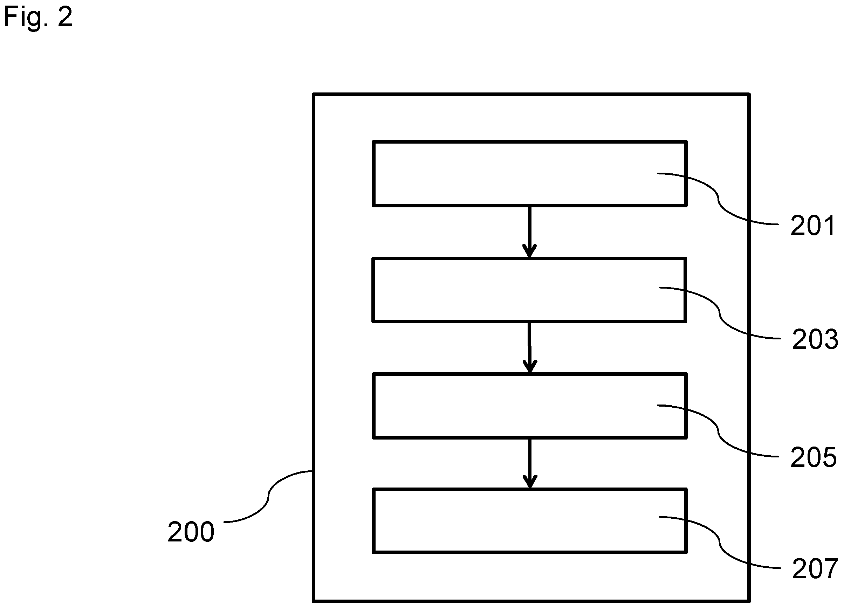

Fig. 2 zeigt ein schematisches Diagramm eines Verfahrens 200 zum Bestimmen einer Signalisierungsinformation, welche einen Betriebszustand eines Energieversorgungsgerätes 100 anzeigt, gemäß einer Ausführungsform. Das Verfahren 200 umfasst die Verfahrensschritte eines Erfassens 201, eines Einstellens 203, eines Charakterisierens 205 und eines Ausgebens 207.

Das Verfahren 203 zum Bestimmen einer Signalisierungsinformation, welche einen Betriebszustand des Energieversorgungsgerätes 100 anzeigt, umfasst: Erfassen 201 einer Betriebsgröße des Energieversorgungsgerätes 100; Einstellen 203 eines Charakterisierungsparameters; Charakterisieren 205 der erfassten Betriebsgröße in Abhängigkeit von dem Charakterisierungsparameter, um die Signalisierungsinformation zu erhalten; und Ausgeben 207 der Signalisierungsinformation über eine Kommunikationsschnittstelle 103 des Energieversorgungsgerätes 100.

Zum Einstellen 203 des Charakterisierungsparameters kann der Charakterisierungsparameter aus einer Mehrzahl von vorgespeicherten Charakterisierungsparametern ausgewählt werden.

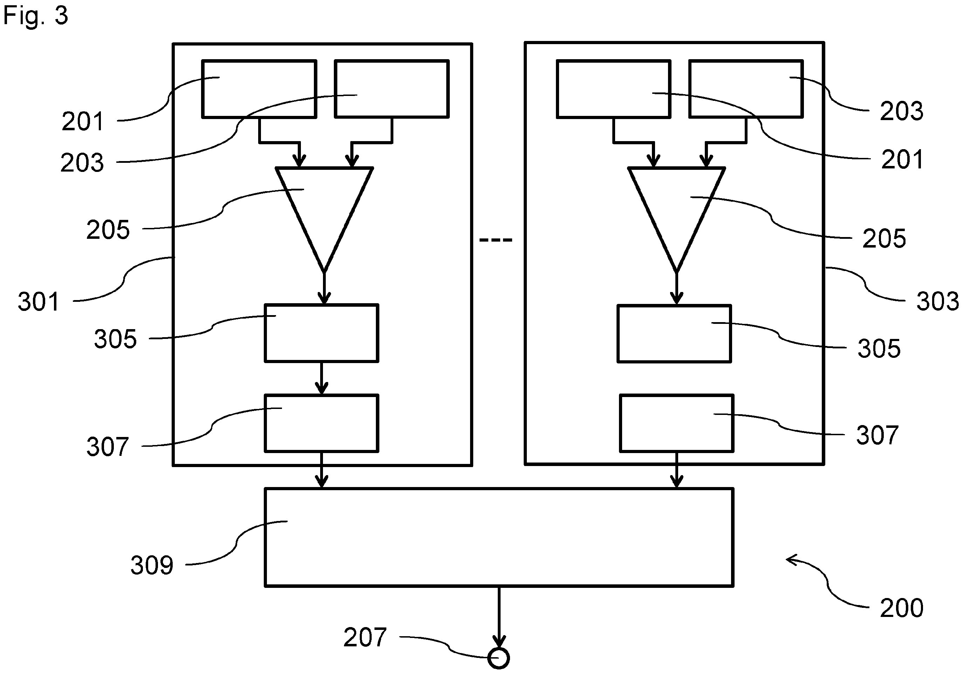

Fig. 3 zeigt ein schematisches Diagramm eines Verfahrens 200 zum Bestimmen einer Signalisierungsinformation, welche einen Betriebszustand eines Energieversorgungsgerätes 100 anzeigt, gemäß einer weiteren Ausführungsform. Das Verfahren umfasst einen ersten Verarbeitungszweig 301, um eine erste Betriebsgröße zu verarbeiten, und einen zweiten Verarbeitungszweig 303, um eine zweite Betriebsgröße zu verarbeiten. Das Verfahren 200 kann auf eine beliebige Anzahl von Verarbeitungszweigen und Betriebsgrößen erweitert werden. Zur besseren Übersicht sind lediglich zwei Verarbeitungszweige abgebildet. Ferner umfasst das Verfahren 200 die Schritte eines Verknüpfens 309 und eines Ausgebens 207 sowie die Verfahrensschritte 305 und 307.

Der erste Verarbeitungszweig 301 umfasst ein Erfassen 201 der ersten Betriebsgröße, beispielsweise einer Ausgangsspannung oder einer "Electric variable 1". Ferner wird beim Einstellen 203 des Charakterisierungsparameters ein erster Schwellwert, wie ein Amplitudenschwellwert für die Ausgangsspannung oder ein "Threshold level 1", eingestellt. Beim Charakterisieren 205 der erfassten ersten Betriebsgröße in Abhängigkeit von dem Charakterisierungsparameter kann die erste Betriebsgröße auf Unterschreiten oder Überschreiten des eingestellten ersten Schwellwertes überprüft werden, um ein Ergebnis der Überprüfung zu erhalten. Das Überprüfen kann in einem Vergleicher oder Comparator durchgeführt werden. Beispielsweise ist das Ergebnis der Überprüfung 0 oder 1. Im weiteren Verlauf kann das Ergebnis der Überprüfung in den Verfahrensschritten 305 und 307 weiterverarbeitet werden. Beispielsweise wird das Ergebnis in dem Verfahrensschritt 305 invertiert oder nicht invertiert. Ferner kann in dem Verfahrensschritt 307 der erste Verarbeitungszweig 301 aktiviert oder deaktiviert werden. Bei dem Durchlaufen des ersten Verarbeitungszweiges 301 kann eine erste Information erzeugt werden.

Der zweite Verarbeitungszweig 303 umfasst ein Erfassen 201 der zweiten Betriebsgröße, beispielsweise eines Ausgangsstroms oder einer "Electric variable n". Ferner wird beim Einstellen 203 des Charakterisierungsparameters ein zweiter Schwellwert, wie ein Amplitudenschwellwert für den Ausgangsstrom oder ein "Threshold level n", eingestellt. Beim Charakterisieren 205 der erfassten zweiten Betriebsgröße in Abhängigkeit von dem Charakterisierungsparameter kann die zweite Betriebsgröße auf Unterschreiten oder Überschreiten des eingestellten zweiten Schwellwertes überprüft werden, um ein Ergebnis der Überprüfung zu erhalten. Das Überprüfen kann in einem Vergleicher oder Comparator durchgeführt werden. Beispielsweise ist das Ergebnis der Überprüfung 0 oder 1. Im weiteren Verlauf kann das Ergebnis der Überprüfung in den Verfahrensschritten 305 und 307 weiterverarbeitet werden. Beispielsweise wird das Ergebnis in dem Verfahrensschritt 305 invertiert oder nicht invertiert. Ferner kann in dem Verfahrensschritt 307 der zweite Verarbeitungszweig 303 aktiviert oder deaktiviert werden. Bei dem Durchlaufen des zweiten Verarbeitungszweiges 303 kann eine zweite Information erzeugt werden.

Bei dem Verknüpfen 209 können die im ersten Verarbeitungszweig 301 bestimmte erste Information und die im zweiten Verarbeitungszweig bestimmte zweite Information mittels einer logischen Operation verknüpft werden, um die Signalisierungsinformation zu erhalten. Die logische Operation kann eine UND-Operation (AND), eine ODER-Operation (OR), eine Exklusiv-ODER-Operation (XOR), eine Nicht-UND-Operation (NAND), eine Nicht-ODER-Operation (NOR) und/oder eine Nicht-Exklusiv-ODER-Operation (XNOR) umfassen.

Bei dem Ausgeben 207 der Signalisierungsinformation kann die Signalisierungsinformation oder ein "Output 1" über eine Kommunikationsschnittstelle 103 oder einen Signalisierungsausgang des Energieversorgungsgerätes 100 ausgegeben werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Energieversorgungsgerät
- 101: Auswerteeinheit
- 103: Kommunikationsschnittstelle

- 200: Verfahren
- 201: Erfassen
- 203: Einstellen
- 205: Charakterisieren
- 207: Ausgeben

- 301: Erster Verarbeitungszweig
- 303: Zweiter Verarbeitungszweig
- 305: Verfahrensschritt
- 307: Verfahrensschritt
- 309: Verknüpfen

## Patentansprüche

1. Energieversorgungsgerät (100), mit:
einer Auswerteeinheit (101) zum Bestimmen einer Signalisierungsinformation, welche einen Betriebszustand des Energieversorgungsgerätes (100) anzeigt; und
einer Kommunikationsschnittstelle (103) zum Ausgeben der Signalisierungsinformation;
wobei die Auswerteeinheit (101) ausgebildet ist,
eine Betriebsgröße des Energieversorgungsgerätes (100) zu erfassen;
einen Charakterisierungsparameter einzustellen; und
die erfasste Betriebsgröße des Energieversorgungsgerätes (100) in Abhängigkeit von dem Charakterisierungsparameter zu charakterisieren, um die Signalisierungsinformation zu erhalten.

2. Energieversorgungsgerät (100) nach Anspruch 1, wobei die Auswerteeinheit (101) ausgebildet ist, den Charakterisierungsparameter aus einer Mehrzahl von vorgespeicherten Charakterisierungsparametern auszuwählen, um den Charakterisierungsparameter einzustellen.

3. Energieversorgungsgerät (100) nach Anspruch 1 oder 2, wobei die Auswerteeinheit (101) ausgebildet ist, die erfasste Betriebsgröße des Energieversorgungsgerätes (100) auf Überschreiten oder Unterschreiten eines Schwellwertes zu überprüfen, um die erfasste Betriebsgröße des Energieversorgungsgerätes (100) in Abhängigkeit von dem Charakterisierungsparameter zu charakterisieren.

4. Energieversorgungsgerät (100) nach einem der vorstehenden Ansprüche, wobei der Charakterisierungsparameter zumindest einen der folgenden Parameter umfasst: einen Amplitudenschwellwert einer Eingangsspannung, einen Amplitudenschwellwert eines Eingangsstroms, einen Amplitudenschwellwert einer Ausgangsspannung, einen Amplitudenschwellwert eines Ausgangsstroms, einen Frequenzschwellwert einer Frequenz, einen Leistungsschwellwert einer Eingangsleistung, einen Leistungsschwellwert einer Ausgangsleistung, einen Temperaturschwellwert einer Temperatur, einen Zeitschwellwert einer Betriebszeit, einen Schwellwert einer Welligkeit einer Ausgangspannung oder einen Schwellwert einer Welligkeit eines Ausgangsstroms.

5. Energieversorgungsgerät (100) nach einem der vorstehenden Ansprüche, wobei die Betriebsgröße des Energieversorgungsgerätes (100) eine der folgenden Betriebsgrößen ist: eine Eingangsspannung, ein Eingangsstrom, eine Ausgangsspannung, ein Ausgangsstrom, eine Frequenz, eine Eingangsleistung, eine Ausgangsleistung, eine Temperatur, eine Betriebszeit, eine Welligkeit einer Ausgangsspannung oder eine Welligkeit eines Ausgangsstroms.

6. Energieversorgungsgerät (100) nach einem der vorstehenden Ansprüche, wobei die Auswerteeinheit (101) ausgebildet ist, eine weitere Betriebsgröße des Energieversorgungsgerätes (100) zu erfassen, und die erfasste Betriebsgröße des Energieversorgungsgerätes (100) sowie die weitere erfasste Betriebsgröße des Energieversorgungsgerätes (100) in Abhängigkeit von dem Charakterisierungsparameter zu charakterisieren, um die Signalisierungsinformation zu erhalten.

7. Energieversorgungsgerät (100) nach Anspruch 6, wobei die Auswerteeinheit (101) ausgebildet ist, die erfasste Betriebsgröße des Energieversorgungsgerätes (100) und die weitere erfasste Betriebsgröße des Energieversorgungsgerätes (100) durch eine logische Operation zu verknüpfen, um die Signalisierungsinformation zu erhalten.

8. Energieversorgungsgerät (100) nach einem der vorstehenden Ansprüche, wobei die Kommunikationsschnittstelle (103) ausgebildet ist, ein digitales Signal auszugeben, um den Betriebszustand des Energieversorgungsgerätes (100) anzuzeigen.

9. Energieversorgungsgerät (100) nach einem der vorstehenden Ansprüche, wobei die Kommunikationsschnittstelle (103) ausgebildet ist, den Charakterisierungsparameter über ein Kommunikationsnetzwerk zu empfangen.

10. Energieversorgungsgerät (100) nach einem der vorstehenden Ansprüche, wobei die Kommunikationsschnittstelle (103) eine Nahfeldkommunikationsschnittstelle umfasst.

11. Energieversorgungsgerät (100) nach einem der vorstehenden Ansprüche, wobei die Kommunikationsschnittstelle (103) drahtlos mit elektrischer Energie versorgbar ist.

12. Energieversorgungsgerät (100) nach einem der vorstehenden Ansprüche, wobei die Kommunikationsschnittstelle (103) eine Antenne umfasst, welche innerhalb eines Gehäuses des Energieversorgungsgerätes (100) angeordnet oder in einer Gehäusewand eines Gehäuses des Energieversorgungsgerätes (100) integriert ist.

13. Verfahren (200) zum Bestimmen einer Signalisierungsinformation, welche einen Betriebszustand eines Energieversorgungsgerätes (100) anzeigt, mit:
Erfassen (201) einer Betriebsgröße des Energieversorgungsgerätes (100);
Einstellen (203) eines Charakterisierungsparameters;
Charakterisieren (205) der erfassten Betriebsgröße in Abhängigkeit von dem Charakterisierungsparameter, um die Signalisierungsinformation zu erhalten; und
Ausgeben (207) der Signalisierungsinformation über eine Kommunikationsschnittstelle (103) des Energieversorgungsgerätes (100).

14. Verfahren (200) nach Anspruch 13, mit:
Erfassen (201) einer weiteren Betriebsgröße des Energieversorgungsgerätes (100); und
Charakterisieren (205) der erfassten Betriebsgröße des Energieversorgungsgerätes (100) sowie der weiteren erfassten Betriebsgröße des Energieversorgungsgerätes (100) in Abhängigkeit von dem Charakterisierungsparameter, um die Signalisierungsinformation zu erhalten.

15. Verfahren (200) nach Anspruch 13 oder 14, mit:
Empfangen des Charakterisierungsparameters über ein Kommunikationsnetzwerk.
